# EUROPEAN PATENT SPECIFICATION

(11) **EP 0 367 262 B1**
(45) Date of publication and mention of the grant of the patent: **02.11.1994**
(21) Application number: 89120300.2
(22) Date of filing: 02.11.1989
(51) Int. Cl.: B26D 7/26, B23B 31/30, B23P 11/00, F16D 1/08, B23P 11/02

(54) **Hydraulically fixable flange and rotary tool**
Hydraulisch festsetzbarer Flansch und rotierendes Werkzeug
Bride hydrauliquement fixable et outil rotatif

(30) Priority: 01.11.1988 JP 143318/88; 01.11.1988 JP 143319/88; 01.11.1988 JP 277001/88; 12.05.1989 JP 54765/89
(43) Date of publication of application: 09.05.1990
(73) Proprietor: MITSUBISHI MATERIALS CORPORATION, Chiyoda-ku Tokyo (JP)
(72) Inventor: Kobayashi, Tatsunori Gifu-Seisakusho Mitsubishi, Godo-cho Anpachi-gun Gifu-ken (JP); Yasutake, Mutsumi Gifu-Seisakusho Mitsubishi, Godo-cho Anpachi-gun Gifu-ken (JP); Koyasu, Junzo Gifu-Seisakusho Mitsubishi, Godo-cho Anpachi-gun Gifu-ken (JP); Hasegawa, Makoto Gifu-Seisakusho Mitsubishi, Godo-cho Anpachi-gun Gifu-ken (JP); Inoue, Masayuki Gifu-Seisakusho Mitsubishi, Godo-cho Anpachi-gun Gifu-ken (JP)
(74) Representative: Füchsle, Klaus, Dipl.-Ing.

(56) References cited:
- FR-A- 2 008 624
- FR-A- 2 180 235
- GB-A- 2 033 285
- GB-A- 2 111 172
- PATENT ABSTRACTS OF JAPAN vol. 8, no. 258 (M-340)(1695) 27 November 1984, & JP-A-59 129612 (MITSUBISHI KINZOKU K.K.) 26 July 1984,

## Description

This invention relates to a hydraulically fixable flange and in particular to a rotary tool comprising upper and lower hydraulically fixable flanges fitted with disc-shaped cutting tools to slice a material placed between said upper and lower flanges.

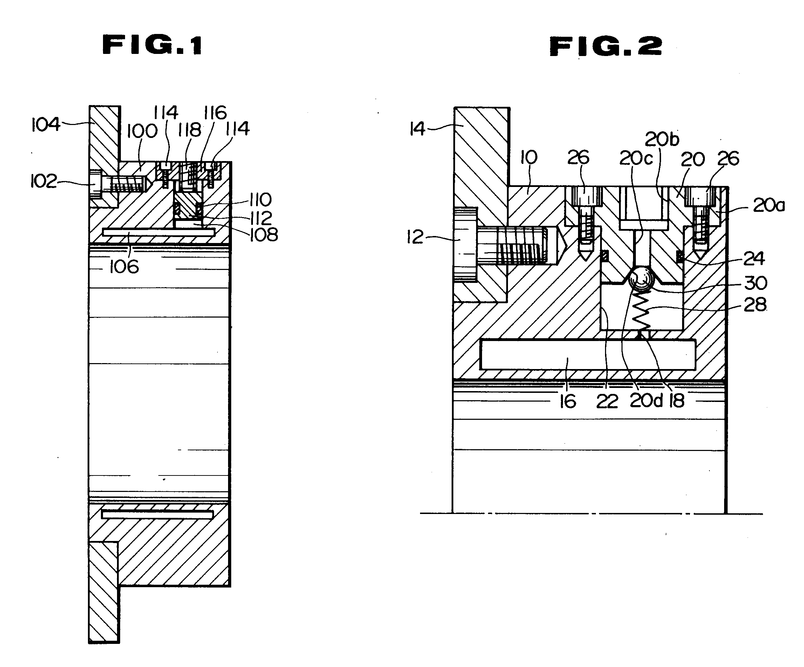

Fig. 1 illustrates a known hydraulically fixable flange of this kind, wherein a ring-shaped tool 104 is fitted to one end of the periphery of the flange body 100 with a bolt 102, an annular hydraulic chamber 106 is formed within the said flange body 100, and a piston 112 having movable O-ring 110 is mounted in radial direction from the flange body 100 within the piston chamber 108 connected to this hydraulic chamber 106, and a set screw 118 is fastened at the center of a hollow cover 116 which is fixed to the flange body 100 with a bolt 114.

In such a conventional hydraulically fixable flange the pressure of pressurized oil within the hydraulic chamber 106 is increased by forcing the piston 112 into the hydraulic chamber 106 by screwing the set screw 118, the bore of the flange body 100 being thus contracted to provide the prescribed tightening force required for clamping.

However, if the width of the chamber 106 is required to be wider or the fixing force is required to be higher, the number of pistons 106 may have to be increased, because the oil amount that can be supplied to the hydraulic chamber 106 by the movement of a single piston 112 may then be insufficient. Consequently, for increassed width there could be insufficient rigidity and strength of the flange body 100 which requires higher accuracy and a larger number of pistons would be required, leading to economical disadvantages. Another drawback is that the volume of oil enclosed within the flange body 100 may change during the summer and the winter due to expansion of oil by heat, which weakens the clamping force and makes the fixing impossible, or it becomes hard to attach and detach because of the contraction of the bore in advance. Acknowledgements of prior arts to be inserted here.

Other prior arts include GB-A-2 111 172 and GB-A-2 033 285.

GB-A-2 111 172 teaches the possibility of providing a hydraulically fixable flange with a plurality of first closed chambers uniformly distributed in the circumferential direction at a small radial distance from the inner circumference of the flange; and a plurality of second closed chambers uniformly distributed in the circumferential direction at a small radial distance from the outer surface of the flange. An individual thrust screw may be provided for each chamber, rotation of a thrust screw serving to change the pressure of the fluid in its associated chamber.

Each chamber may be in communication with a pressure gauge comprising a spring biassed piston in a bore in the flange the piston having a pin projecting out of the flange, said pin having division markings.

GB-A-2 033 285 teaches the possibility of using two semi-circular elements connected to each other to form a torus-shaped hydraulically fixable flange. Each element has a cavity therein which is defined on the radially inner side of the element by a flexible membrane. The cavities, in the assembled state of the flange, are connected to one another in a gas-tight manner. One of the elements is provided with a feed valve permitting compressed gas to be fed thereto.

### SUMMARY OF THE INVENTION

It is an object of this invention to overcome the above mentioned drawbacks, and to provide a rotary tool comprising a hydraulically fixable flanges for carrying ring-shaped cutting tools on a pair of parallel shafts each shaft being rotatable about its own axis, the arrangement being such that said cutting tools can slice through material when placed between said ring-shaped cutting tools on said flanges on the parallel shafts. It is a further object of the present invention to so construct said rotary tool that the cutting force to which one ring-shaped cutting tool is exposed is offset by that of another on the same flange which reduces the force of thrust between the flange body and the shaft and makes it possible to cut a thick plate.

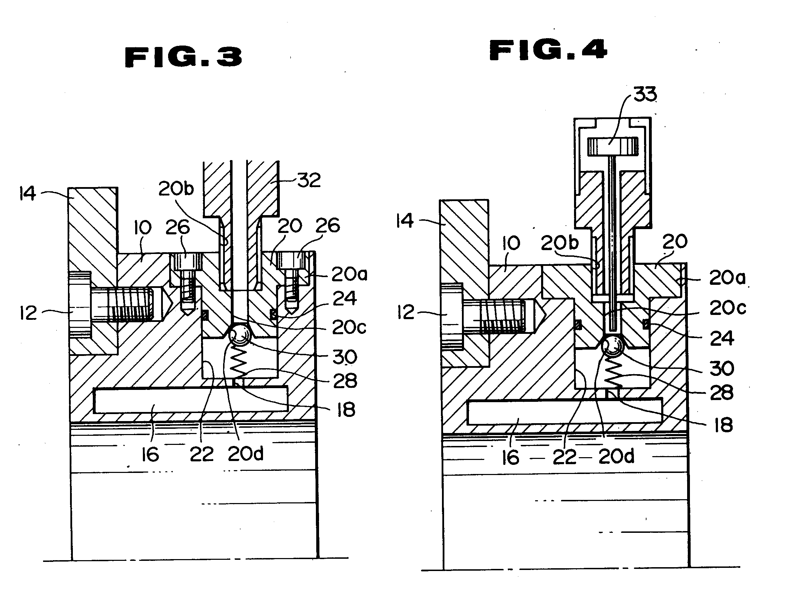

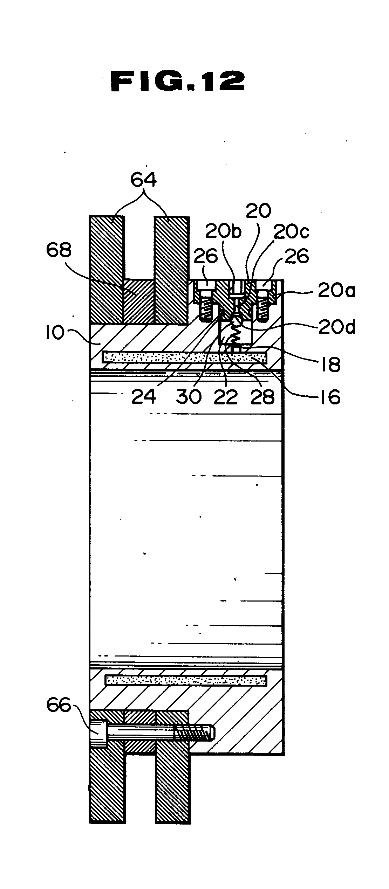

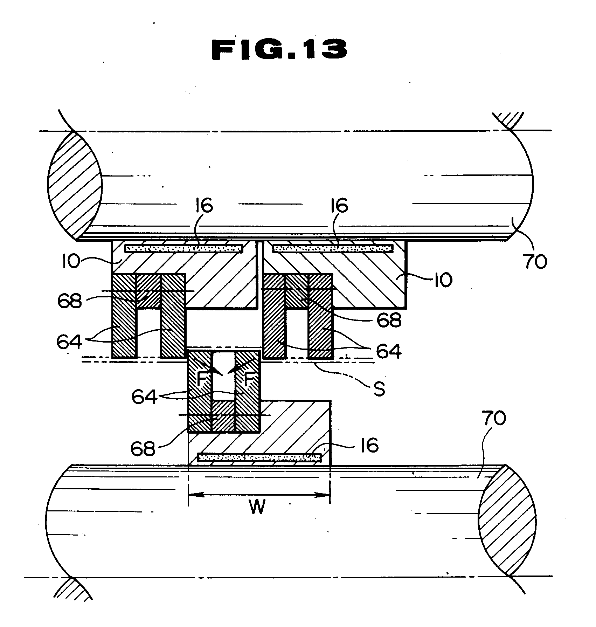

The invention is as defined in the accompanying Claim 1. One way of carrying out the present invention is described with reference to Figs. 12 and 13. Fig. 2 is an enlarged view of the fluid pressurizing means used in Fig. 12. Other fluid pressurizing means that may be used in the present invention appear in Figs. 3 to 11.

### BRIEF DESCRIPTION OFTHE ATTACHED DRAWINGS

Fig. 1 is a cross-sectional view of a known hydraulically fixable flange with meand for adjusting the hydraulic pressure therein.

Fig. 2 to Fig. 4 show a first example of means for adjusting the hydraulic pressure in a tool.

Fig. 2 show a cross-sectional view.

Fig. 3 shows a cross-sectional view of the hydraulic pressure chamber as it is fed with pressure oil.

Fig. 4 shows a cross-sectional view of the chamber as it is emptied of pressure oil.

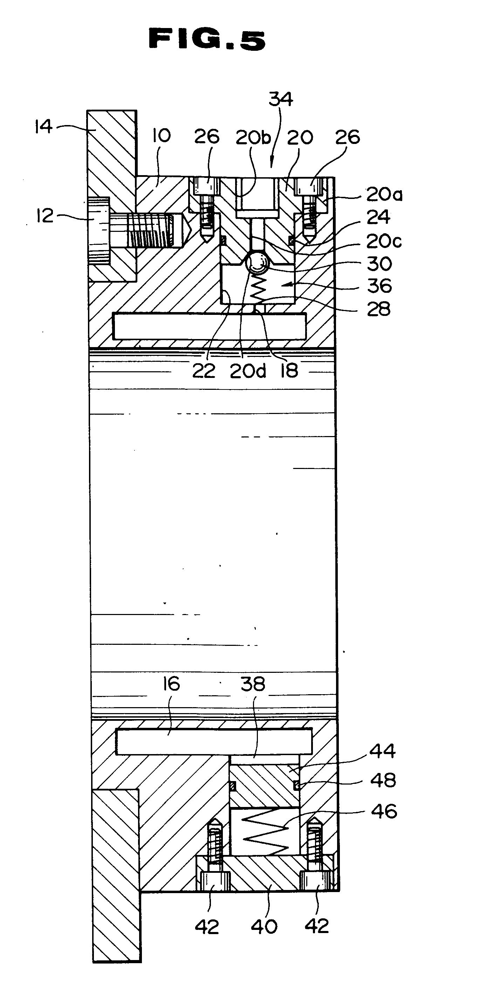

Fig. 5 is a cross-sectional view of a second example of means for adjusting the hydraulic pressure.

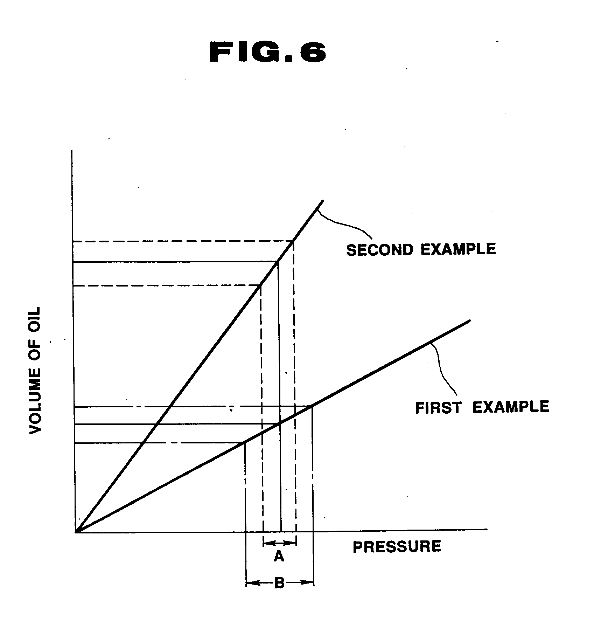

Fig. 6 is a characteristic diagram illustrating the relation between oil volume and pressure in said first and second examples.

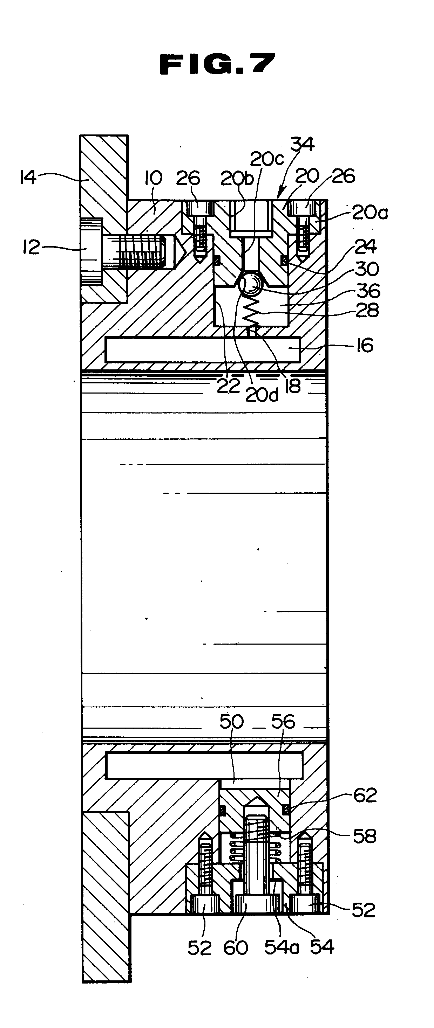

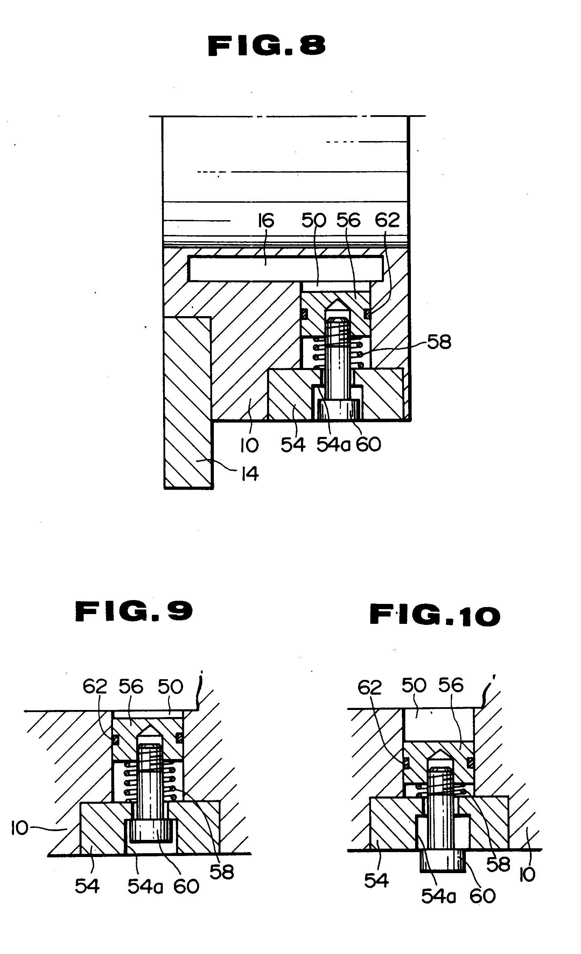

Fig. 7 and Fig. 10 show a third example of means for adjusting the hydraulic pressure.
Fig. 7 is a cross-sectional view.

Fig. 8 is an illustration of the head of the preload setting bolt on the same plane with the cover.

Fig. 9 is an illustration of the head of the preload setting bolt drawn toward the hydraulic pressure chamber.

Fig. 10 is an illustration of the head of the preload setting bolt protruding from the cover.

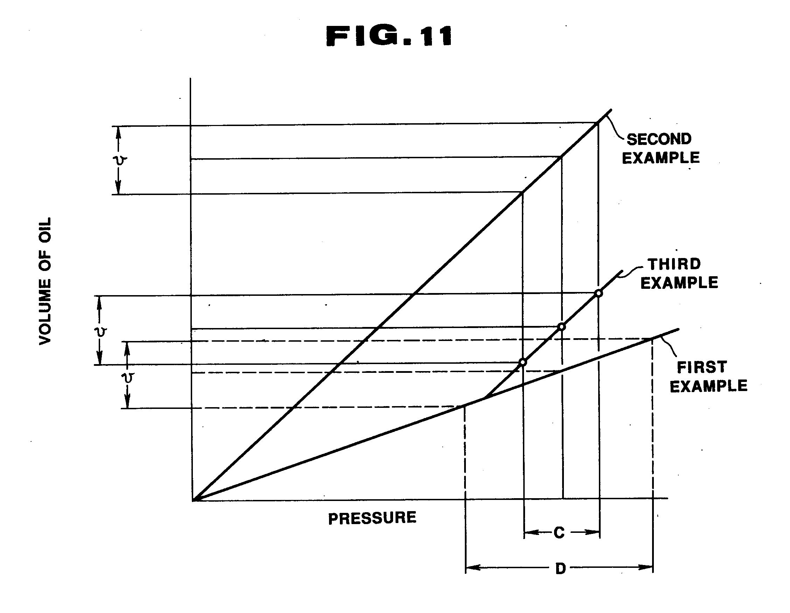

Fig. 11 is a characteristic diagram illustrating the pressure fluctuations in response to changes in oil volume in the first, second and the third examples.

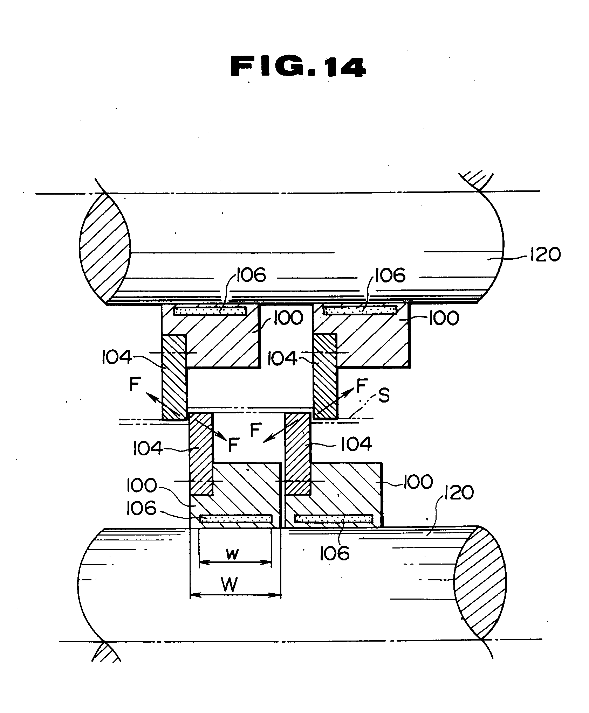

Fig. 14 is a cross-sectional view of the rotary knives in the state of use using the hydraulically fixable flange as shown in Fig 1.

Figs. 1-11 and 14 are concerned with prior art and only Fig. 12 and Fig. 13 illustrate a particular embodiment of the present invention.

As will be made clear hereinafter with reference to Figs. 12 and 13 a pair of rotatable shafts are povided on which are mounted hydraulically pressurizable flange bodies having two or more ring-shaped cutting tools attached to the outer periphery of each flange body. The flange bodies are arranged to let them offset each other's shearing force to which they are exposed. This reduces the force of thrust working between each flange body and its associated shaft and makes it possible to cut a thick plate.

If ring-shaped tools are arranged at smaller intervals for narrower cutting, it is possible to lengthen the width of the flange and widen the hydraulic chamber without shortening the flange width as before.

### PARTICULAR EMBODIMENT

A first example of a fluid pressurizing means is shown in Fig. 2 through Fig. 4. In these figures, reference numerals 10 refers to a loop-shaped flange body. A ring-shaped tool 14 is fastened with bolts 12 to one edge of the periphery of this flange body 10. A circular hydraulic chamber 16 is formed within the flange body 10 adjacent its inner periphery. Formed in the outer periphery of the flange body 10 is a fitting hole 22 into which to install an external hydraulic pressure supply unit, there being a communicating hole 18 between the hydarulic chamber 16 and said fitting hole 22.

A flange 20a is formed on an outer end of an external hydraulic pressure supply unit 20 and an O-ring 24 is fitted to the periphery of the inner end. A supply jig fixing hole 20b, communicating hole 20c and valve seat 20d are formed in the hydraulic pressure supply unit 20 from one end to the other end. The external hydraulic pressure supply unit 20 is fixed to the flange body 10 by fastening bolts 26 inserted into the flange 20a. A spring 28 is housed in the fitting hole 22. A ball 30 is forced by the spring 28 hard against a valve seat 20d on the hydraulic pressure supply unit 20, as when a supply jig is fitted into the supply jig hole 20b of the external hydraulic supply unit 20, and an hydraulic pump is coupled thereto by way of a coupler, the supplied pressure oil, working against the force of the spring 28, forces down the ball 30 pressed against the valve seat 20 by way of the communicating hole 20c of the external hydraulic pressure supply unit 20, and then finds its way to the hydraulic pressure chamber 16 through fitting hole 22 and the communicating hole 18. In consequence, the pressure within the hydraulic pressure chamber 16 can easily be raised to the prescribed level. Therefore it is possible to securely insert a shaft inside the flange body.

If the pressure in the hydraulic pressure chamber 16 is to be released, as indicated by Fig. 4, a press pin 33 is inserted through the communicating hole 20c of the external hydraulic pressure supply unit 20 to push down the ball 30, regardless of the force derived from the spring 28, to instantly discharge the pressure oil from hydraulic pressure chamber 16.

Fig. 5 shows a second example of fluid pressurizing means. As for the parts with the same composition as in the first example, illustrated by Fig. 2 through Fig. 4, the same reference numerals are attached to them, with the explanation omitted. In this second example, there are oil pressure supply hole 34 and the valve mechanism 36, as shown by Fig. 5. In other words, the communicating hole 18 and the fitting hole 22 to install external hydraulic pressure supply unit 20 are formed between the above hydraulic pressure chamber 16 and the periphery of the flange body 10. When flange 20a is formed on the edge of the external hydraulic pressure supply unit and O-ring 24 is fitted to the periphery on the other end, supply jig fixing hole 20b, communicating hole 20c and valve seat 20d are formed in turn on the section from one end of the inside to the other end. The above external hydraulic pressure supply unit 20 is fixed to the flange body 10 with a fitting bolt 26 inserted into the flange 20a. The spring 28 is set inside of installation hole 22 on the above flange body 10. The ball 30 forced by this spring 28 is pressed hard against valve seat 20d on the above external hydraulic pressure supply unit 20.

The piston chamber 38 is linked up to the above hydraulic pressure chamber 16 and this piston chamber 38 is sealed up by cover 40a fixed with the fastening bolt 42. Inside the above piston chamber 38 piston 44 is arranged to slide freely to and from the hydraulic pressure chamber 16, and there is also the spring 46 to give additional force to throw this piston 44 to the side of hydraulic pressure chamber 16. Numeral 48 on Fig. 5 refers to O-ring.

With the hydraulic pressure fixed flange composed as described above, if the supply jig is fitted to supply jig hole 20b of the external hydraulic pressure supply unit 20 and pressure oil is supplied from the hydraulic pump, in the same way as in the first example, the pressure in the pressurized oil chamber can easily be raised to the prescribed level.

If there should be a temperature difference between the above supplied pressure oil and the flange body 10 in this situation (normally the temperature rises because of use of a hydraulic pump, but sometimes it falls), or if there should be a change in the quantity of oil owing to an oil leakage, the piston 44 with additional force by the spring 46 slides back and forth within the piston chamber 38, absorbing the above change, thereby minimizing the pressure fluctuations in the hydraulic pressure chamber 16. Therefore, it is possible to keep the fastening power stable (See fluctuation range A and B on Fig. 6).

In order to release the pressure within the hydraulic pressure chamber 16, it is only necessary to push a pin into the inside of the pressure oil supply unit 20 so that the pressurized oil in the hydraulic pressure chamber 16 can be instantaneously discharged to the outside to release pressure.

Fig. 7 through Fig. 10 illustrate the third example of pressure adjusting means. In this third example, the same numerals are assigned to those parts shown on Fig. 2 as in the first and second examples, and therefore the explanation is omitted here.

In this third example, there are hydraulic pressure supply hole 34 and valve mechanism 36, as indicated on Fig.7. Moreover, piston chamber 50 is linked up with the above hydraulic pressure chamber 16. The external opening of this piston chamber 50 is fitted with cover 54 fixed by fastening bolt 52. Inside the piston chamber 50 there is provided a piston 56 set to freely slide toward and away from the hydraulic pressure chamber 16. There is also the spring 58 attached to push this piston 56 toward the side of the hydraulic pressure chamber 16. Preload setting bolt 60 is screwed into the above piston 56 while passing through the above preload setting bolt 60 is arranged to freely pop up or down into the fixing depression on the above cover 54. Numeral 62 on Fig. 1 refers to O-ring.

With the hydraulically fixable flange composed as above, it is easy to raise pressure within the hydraulic pressure chamber 16 to the prescribed level by fitting the supply jig into the supply jig fixing hole 20b of the external hydraulic pressure supply unit 20, as in the first and the second examples, and by supplying pressure oil from the hydraulic pump.

In this case, the situation is as if there were no spring 58 set until the piston 56 in the piston chamber 50 begins moving against the energy provided by the spring 58 (See Fig. 9), and, as shown in Fig. 11, the pressure rises as described in Fig. 2. Then, when the pressure in the hydraulic pressure chamber rises above the prescribed level, the piston 56 in the piston chamber 50 begins moving against the additional force emanating from the spring 58. Accordingly the head of the preload setting bolt 60 moves outwards within the fixture depression 54a of the cover 54 (see Fig. 8) and protrudes outside (see Fig. 10). Consequently, the pressure within the hydraulic pressure chamber 16 can easily be known by checking the position of the head of the above preload setting bolt 60 from outside.

In the situation where the above-described spring 58 is in function, if there is difference in temperature between the above supplied oil pressure and the flange body 10 (normally the temperature often rises because of use of a hydraulic pump, but sometimes it drops), or if there is a change in oil, additional force provided by the spring 58 causes the piston 56 to slide within the piston chamber 50, absorbing the above change and pressure chamber 16. Therefore the fastening power can be kept stable (See fluctuation range C and D on Fig. 11).

If one is to release the pressure within the hydraulic pressure chamber 16, all one has to do is to push a pin inside the external hydraulic pressure supply unit 20 as in the first and the second examples. Then pressure oil can be instantaneously discharged to the outside from the hydraulic pressure chamber 16 to release the pressure.

As shown above, since preloaded spring 58 (elastic body) is built-in in this third example of application, the same behavior can be noted as in the absence of an elastic body until the pressure reaches the point equivalent to the preload. Where the pressure exceeds the level comparable to the preload, the elastic body gets into action, causing the necessary amount of oil to increase a little compared with the first example of application shown on Fig. 2. The same effect as in the presence of an elastic body will be produced on the change of hydraulic pressure. Since the position of preload setting bolt 60 indicates the level of pressure within the hydraulic pressure chamber 16, it is possible to monitor the fastening power at work from outside.

Besides, in this third example, the head of the preload setting bolt 60 comes into contact with installation depression 54a of the cover 54 (See Fig. 9) to apply a preload upon the piston 56 not to move farther toward the hydraulic pressure chamber 16. It is also alright to fit a stopper at a place of piston chamber 50 near the hydraulic pressure chamber 16 and put the piston 56 onto this stopper in order to prevent the piston 56 from moving nearer to the hydraulic pressure chamber 16.

Shown in Fig. 12 and Fig. 13 is an example of the present invention. This example uses a hydraulically fixable flange as described in the first example. Since this part has the same composition, only the identical numerals are attached and the explanation is omitted.

The rotary knife in the present invention is composed of two pieces of ring-shaped tool 64 fitted to the flange body. The installation bolt 66 is used to fix the two tools 64. A ring-like spacer 68 is placed between the two tools 64. The presence of this spacer 68 keeps the two tools 64 fitted along the direction of the axis of the shaft 70 at a certain interval.

This pair of rotary knives, one above and the other below, are used to cut sheet-like workpiece S as shown in Fig. 13.

To compare this invention with another example of using one piece of ring-shaped tool 104 fitted to the flange body 10 to cut a sheet-like workpiece S, as shown on Fig. 1, it is necessary to narrow the width W of the the sheet-like workpiece S in a strip with the composition of one piece of ring-shaped tool 104 attached to the flange body 10. In this case the following problems arise:
(1) Smaller width (W) of flange body 100 will inevitably mean a narrower range for the hydraulically driven clamp and no larger clamping power will be obtained.
(2) With a smaller width (W) of the flange body 100, it will be difficult in terms of space to design the piston 112 to give necessary hydraulic pressure to the clamp and consequently the strength and rigidity of the flange body 100 will be reduced.
(3) If the flange body 100 is smaller in width, the outer diameter of the shaft 120 and the width of the flange body 100 will have a poor balance, and the deflection accuracy of the rotary knives will drop.

In the particular embodiment of the present invention two ring-shaped tools 64 are attached to flange body 10 face cutting resistance F in an inverse direction, as shown on Fig. 13. Therefore, two opposed directions of cutting resistance F offset each other with a weaker thrust force applied onto the flange body 10. This means that a small amount of clamping power is required of the hydraulic pressure chamber 16.

In cutting a sheet-like workpiece S into narrow strips, there is no need to narrow the width of the flange body 100 as before. The operator has only to narrow the space between two ring-shaped tools attached to the flange body 10. Consequently, the flange body 10 can become wider, helping to raise the deflection accuracy of the rotary knives, and it is easier to get a wider space for external hydraulic pressure supply unit 20.

Needless to say, any desired number of ring-shaped tools 64 can be fitted to the flange body 10 and they can be lined at intervals of whatever distance is desired.

As described above, the first example of means for adjusting of the hydraulic pressure in the chamber within the flange body includes an hydraulic pressure supply porthole running through the chamber to the outside. A valve mechanism that is installed between the above hydraulic pressure chamber and the hydraulic pressure supply hole, makes it possible to feed pressure oil into the chamber from outside. Since both the supply of pressure oil into the chamber and the release of pressure therefrom become smooth with the opening and closing operation of the valve mechanism, it is possible to design smaller individual parts to the necessary minimum size (smaller parts can withstand all the more greater pressure) without any worry about oil quantity within the hydraulic pressure chamber. Consequently it becomes possible to reduce the machining of the flange body to the necessary minimum level, without adversely affecting its strength, precision and rigidity and it is also possible to make a flexible response to the need for larger units.

The second example of means for adjusting the hydraulic pressure, in connection with the above-described effects, shows the arrangement of a piston to regulate the hydraulic pressure in the hydraulic pressure chamber, the piston being freely movable against the biassing action of an elastic body to thrust the piston against the fluid of the above hydraulic pressure chamber. Even in the case of a change in the quantity of oil due to temperature change, oil volume fluctuations or oil leakage, it is possible to reduce the likely change in the pressure within the hydraulic pressure chamber by moving the piston by means of the elastic body and consequently retain stable fastening force.

In the first variation with respect to the first example of means for adjusting the hydraulic pressure, the pistons are arranged to regulate the hydraulic pressure in the hydraulic pressure chamber and move freely within the prescribed bounds and an elastic body is installed to thrust the piston against the fluid in the hydraulic pressure chamber. With the above described piston pressed toward the hydraulic pressure chamber by the elastic body, the pressure within the hydraulic pressure chamber finds itself in a situation similar to one created with no elastic body set up. If the pressure exceeds the preset level, the elastic body begins functioning, minimizing the pressure change even in the case of a fluctuation of oil quantity due to temperature-caused oil volume changes or oil leakage. It is also possible to retain stable fastening force with a least amount of oil needed and to take a quick and smooth disconnecting action.

Besides the effects described in the aforesaid first example, the second example of means for adjusting the hydraulic pressure provides the preload monitor to the piston and arranges it to freely pop up into the flange body. The preload monitor indicates the transfer of the piston and enables the operator to readily know the pressure in the hydraulic pressure chamber and safely confirm the fastening force.

The rotary knives in the second example of means for adjusting the hydraulic pressure are fixed to the shaft when the internal boundary of the flange body is shortened by supplying pressure oil into the hydraulic pressure chamber formed within the above flange body. A hydraulic pressure supply hole is run through the hydraulic pressure chamber to reach the outside with a valve mechanism placed between the chamber and the hole to enable the pressure oil to be fed into the chamber from outside. Ring-shaped tools are lined up along the periphery of the flange body at certain intervals in the direction of the axis of the shaft. The cutting force which one tool is exposed to is offset by that of another, which reduces the force of thrust at play between the flange body and the shaft and makes it possible to cut a thick plate. When the ring-shaped tools are arranged at smaller intervals in order to cut narrow pieces, it is possible to enlarge the width of the flange body and create a greater pressure oil chamber.

## Claims

1. A rotary tool comprising:
(a) a pair of parallel shafts (70) each rotatable about its own longitudinal axis;
(b) a flange body (10) mounted on each shaft (70), each flange body (10) comprising a bore through which its associated shaft (70) extends;
(c) each flange body (10) having an hydraulic chamber (16) within said flange body; a hole (20c) in said flange body communicating said hydraulic chamber (16) with the outside; and a valve system (20d) provided between said hydraulic chamber (16) and said hole (20c) for permitting pressurized hydraulic fluid to enter said chamber (16) from the outside so that said pressurized fluid can expand said chamber (16) to cause the internal peripheral surface of the flange body defining said bore to securely grip its associated shaft 70;
(d) two ring-shaped cutting tools (64) disposed on an external peripheral surface of each flange body (10) and spaced apart by a specific distance in the axial direction Of the flange body (10); the resulting construction being hereinafter referred to as a rotary knife device;
(e) not less than one rotary knife device provided on one shaft (70) of said pair of parallel shafts (70), and not less than two rotary knife devices provided on the remaining shaft (70) of said pair of parallel shafts (70); wherein
(f) one of said not less than one rotary knife device provided on one shaft (70) of said pair of parallel shafts (70) is straddled by said not less than two rotary knife devices provided on said remaing shaft (70) of said pair of parallel shafts (70), and said ring-shaped cutting tools (64) provided on said not less than one rotary knife device are closely engaged in contact with said ring-shaped cutting tools (64) provided on said not less than two rotary knife devices so as to slice a material (S) when placed between said rotary knife devices disposed on said pair of parallel shafts (70).

2. A rotary tool as in Claim 1 wherein each pair of ring-shaped cutting tools (64) on a flange body (10) are spaced apart by said specific distance by a ring-shaped spacer (68).

3. A rotary tool as in Claim 2 wherein a bolt (66) extending through the pair of ring-shaped cutting tools (64) and the intermediate spacer (68) secure these to their associated flange body (10).

## Patentansprüche

1. Drehwerkzeug, umfassend:
(a) zwei parallele Wellen (70), die beide um ihre eigene Längsachse drehbar sind;
(b) einen Flanschkörper (10), der an jeder Welle (70) befestigt ist, wobei jeder Flanschkörper (10) eine Bohrung aufweist, durch welche sich seine zugeordnete Welle (70) erstreckt;
(c) wobei jeder Flanschkörper (10) eine Hydraulikkammer (16) innerhalb des Flanschkörpers aufweist; wobei eine Bohrung (20c) in dem Flanschkörper die Hydraulikkammer (16) mit der Außenseite verbindet; und ein Ventilsystem (20d), das zwischen der Hydraulikkammer (16) und der Bohrung (20c) vorgesehen ist, um unter Druck stehendes Hydraulikfluid in die Kammer (16) von der Außenseite eintreten zu lassen, damit das Druckfluid die Kammer (16) expandieren kann, damit die innere Umfangsfläche des Flanschkörpers, welche die Bohrung festlegt, fest die dazugehörige Welle (70) greift;
(d) zwei ringförmige Schneidwerkzeuge (64), die an einer äußeren Umfangsfläche jedes Flanschkörpers (10) angeordnet sind, und die voneinander unter einem bestimmten Abstand in Axialrichtung des Flanschkörpers (10) beabstandet sind; wobei die resultierende Konstruktion nachfolgend als Drehmessereinrichtung bezeichnet wird;
(e) mindestens eine Drehmessereinrichtung, die an einer Welle (70) der beiden parallelen Wellen (70) vorgesehen ist, und mindestens zwei Drehmessereinrichtungen, die an der verbleibenden Welle (70) der beiden parallelen Wellen (70) vorgesehen ist;
(f) wobei sich die mindestens zwei Drehmessereinrichtungen, die an der verbleibenden Welle (70) der beiden parallelen Wellen (70) vorgesehen sind, zu beiden Seiten der mindestens einen Drehmessereinrichtung, die an einer Welle (70) der beiden parallelen Wellen (70) vorgesehen ist, erstrecken, und wobei die ringförmigen Schneidwerkzeuge (64), die an der mindestens einen Drehmessereinrichtung vorgesehen sind, in enger Berührung mit den ringförmigen Schneidwerkzeugen (64) stehen, die an den mindestens zwei Drehmessereinrichtungen vorgesehen sind, so daß ein Material (S) zerschnitten wird, wenn dieses zwischen den Drehmessereinrichtungen angeordnet wird, die an den beiden parallelen Wellen (70) angeordnet sind.

2. Drehwerkzeug nach Anspruch 1,
wobei jedes Paar von ringförmigen Schneidwerkzeugen (64) an einem Flanschkörper (10) voneinander um einen bestimmten Abstand durch einen ringförmigen Abstandhalter (68) beabstandet ist.

3. Drehwerkzeug nach Anspruch 2,
wobei sich ein Bolzen (66) durch die beiden ringförmigen Schneidwerkzeuge (64) erstreckt, und der zwischenliegende Abstandhalter (68) diese an ihrem zugehörigen Flanschkörper (10) sichert.

## Revendications

1. Outil rotatif comprenant :
(a) une paire d'arbres parallèles (70) chacun pouvant tourner autour de son propre axe longitudinal,
(b) un corps de bride (10) monté sur chaque arbre (70), chaque corps de bride (10) comprenant un alésage à travers lequel son arbre associé (70) s'étend,
(c) chaque corps de bride (10) ayant une chambre hydraulique (16) à l'intérieur dudit corps de bride, un trou (20c) dans ledit corps de bride faisant communiquer ladite chambre hydraulique (16) avec l'extérieur; et un système de soupape (20d) prévu entre ladite chambre hydraulique (16) et ledit trou (20c) pour permettre au fluide hydraulique sous pression d'entrer dans ladite chambre (16) à partir de l'extérieur de sorte que ledit fluide sous pression peut dilater ladite chambre (16) pour amener la surface périphérique interne du corps de bride définissant ledit alésage à saisir de manière sûre son arbre associé (70),
(d) deux outils de découpe en forme d'anneau (64) disposés sur une surface périphérique externe de chaque corps de bride (10) et espacés d'une distance spécifique dans la direction axiale du corps de bride (10), la construction obtenue étant par la suite appelée dispositif à couteau rotatif,
(e) au moins un dispositif à couteau rotatif prévu sur un arbre (70) de ladite paire d'arbres parallèles (70) et au moins deux dispositifs à couteau rotatif étant prévus sur l'arbre restant (70) de ladite paire d'arbres parallèles (70), dans lequel
(f) un desdits au moins un dispositif à couteau rotatif prévu sur le premier arbre (70) de Ladite paire d'arbres parallèles (70) est enjambé par lesdits au moins deux des dispositifs à couteau rotatif prévu sur ledit arbre restant (70) de ladite paire d'arbres parallèles (70) et lesdits outils de découpe en forme d'anneau (64) prévus sur ledit au moins un dispositif à couteau rotatif sont fermement mis en contact avec lesdits outils de découpe en forme d'anneau (64) prévus sur lesdits au moins deux dispositifs à couteau rotatif de façon à trancher un matériau (S) lorsque placé entre lesdits dispositifs à couteau rotatifs disposés sur ladite paire d'arbres parallèles (70).

2. Outil rotatif selon la revendication 1, dans lequel chaque paire d'outils de découpe en forme d'anneau (64) sur un corps de bride (10) est espacée d'une distance spécifique par un dispositif d'écartement en forme de bague (68).

3. Outil rotatif selon la revendication 2, dans lequel un boulon (66) se prolongeant à travers la paire des outils de découpe en forme d'anneau (64) et à travers le dispositif d'écartement intermédiaire (68) fixe ceux-ci à leur corps de bride associé (10).
